# EUROPEAN PATENT APPLICATION

(11) **EP 1 258 819 A2**
(43) Date of publication of application: **20.11.2002**
(21) Application number: 02252377.3
(22) Date of filing: 02.04.2002
(51) Int. Cl.: G06F 17/30

(54) **System and method for providing a file in multiple languages**

(30) Priority: 30.03.2001 US 822627
(71) Applicant: Hewlett-Packard Company, Palo Alto, CA 94304 (US)
(72) Inventor: Balaji, Lakshmi, Folsom, California 95630 (US); Mowzooni, Zamameh, El Dorado Hills, California 95762 (US)
(74) Representative: Tollett, Ian

(57) **Abstract**

A system for providing a file (24) with text in multiple languages, which includes a file (24) having text for displaying in multiple languages, a string identifier (34) for uniquely identifying each text in the file, a language identifier (32) for uniquely identifying each language available for the file, a localized string (36) for displaying text defined by the string identifier and the language identifier, a message catalog (26) for storing a plurality of the localized strings, and a localized string retrieval function (28) for retrieving the localized string according to the string identifier and the language identifier from the message catalog.

## Description

The present invention generally relates to an improved system and method for providing a file in multiple languages. More specifically, it relates to an improved system and method for providing a file in multiple languages using a device linked to a message catalog having a plurality of localized strings for displaying text in the file, wherein each localized string is defined by a string identifier that uniquely identifies each text in the file and a language identifier that uniquely identifies each language available for the file.

As a result of the Internet, global communication has become commonplace for most business interactions. As a result, it is currently quite typical that a file is required to be available in multiple languages. This is especially useful for World Wide Web communications because the Internet is used in different countries. As a result, there is a clear need for files and web pages to be available in multiple languages. Put differently, files and web pages need to be adapted for use with an international market, which is commonly known as localization. Localization is a process for translating all user-visible text and documentation into a user's own language.

Currently, most localizations are done on a page-level basis, meaning each and every page is stored in different language versions. For example, in the context of the web, if a Hyper Text Markup Language ("HTML") page is available in five languages, the HTML page in each language constitutes a separate file. So, because five different languages are available, there will be five files for the same HTML page. In other words, there is one file for each available language.

One problem with the prior method is that it is not a very scalable solution. The code size is directly proportional to the number of languages. Another problem is that because the same page must be kept in multiple files for different languages, the prior method uses memory in an inefficient manner, which will be more essential as the use of Personal Digital Assistant ("PDA") becomes more popular. A more efficient use of the storage memory is desirable for the PDAs and embedded systems, since they generally have far less storage memory than desktop and laptop computers. In addition, the use of multiple files makes revisions to these files and pages very time consuming and error prone, since each file must be revised separately.

The present invention is directed to an improved system and method for providing a file in multiple languages. More specifically, it relates to an improved system and method for providing a file in multiple languages using a device linked to a message catalog having a plurality of localized strings for displaying text in the file, wherein each localized string is defined by a string identifier that uniquely identifies each text in the file and a language identifier that uniquely identifies each language available for the file.

The present invention provides a system that includes a file having text for displaying in multiple languages, a string identifier for uniquely identifying each text in the file, a language identifier for uniquely identifying each language available for the file, a localized string for displaying text defined by the string identifier and the language identifier, a message catalog for storing a plurality of the localized strings, and a localized string retrieval function for retrieving the localized string according to the string identifier and the language identifier from the message catalog.

The present invention also provides a method that includes the steps of requesting a file in a specified language by the user, identifying the specified language, contacting the message catalog with the string identifier and the specified language, and returning the localized string designated by the string identifier and specified language.

A number of preferred embodiments of the invention will now be described with reference to the drawings, in which:-
FIGURE 1 is an architectural diagram of a network system in which the present invention can be implemented;
FIG. 2 illustrates an exemplary database structure of the message catalog;
FIG. 3 illustrates an exemplary code configuration for web-based implementation of the present invention;
FIG. 4 illustrates an example of a web page that can display two different languages by using the same file;
FIG. 5 is a flow chart illustrating the preferred functionality of the retrieval method of the present invention; and,
FIG. 6 is a flow chart illustrating the preferred functionality of the get language identifier method of the present invention shown in FIG. 5.

The following terms and acronyms are used throughout the detailed description:

Client-Server. A model of interaction in a distributed system in which a program at one site sends a request to a program at another site and waits for a response. The requesting program is called the "client," and the program which responds to the request is called the "server." In the context of the World Wide Web (discussed below), the client is a "Web browser" (or simply "browser") which runs on the computer of a user; the program which responds to browser requests by serving Web pages, or other types of Web content, is commonly referred to as a "Web server."

Content. A set of executable instructions that is served by a server to a client and that is intended to be executed by the client so as to provide the client with certain functionality. Web content refers to content that is meant to be executed by operation of a Web browser. Web content, therefore, may non-exhaustively include one or more of the following: HTML code, SGML code, XML code, XSL code, CSS code, Java applet, JavaScript and C-"Sharp" code.

Hyper Text Markup Language ("HTML"). A standard coding convention and set of codes for attaching presentation and linking attributes to informational content within documents. (HTML 3.2 is currently the primary standard used for generating Web documents.) During a document authoring stage, the HTML codes (referred to as "tags") are embedded within the informational content of the document. When the Web document (or HTML document) is subsequently transferred from a Web server to a browser, the codes are interpreted by the browser and used to display the document. Additionally, in specifying how the Web browser is to display the document, HTML tags can be used to create links to other Web documents (commonly referred to as "hyperlinks"). For more information on HTML, see Ian S. Graham, The HTML Source Book, John Wiley and Sons, Inc., 1995 (ISBN 0471-11894-4).

Hyper Text Transport Protocol ("HTTP"). The standard World Wide Web client-server protocol used for the exchange of information (such as HTML documents, and client requests for such documents) between a browser and a Web server. HTTP includes a number of different types of requests, which can be sent from the client to the server to request different types of server actions. For example, a "GET" request, which has the format GET <URL>, causes the server to return the document or file located at the specified URL.

Hyperlink. A navigational link from one document to another, from one portion (or component) of a document to another, or to a Web resource, such as a Java applet. Typically, a hyperlink is displayed as a highlighted word or phrase that can be selected by clicking on it using a mouse to jump to the associated document or document portion or to retrieve a particular resource.

Hypertext System. A computer-based informational system in which documents (and possibly other types of data entities) are linked together via hyperlinks to form a user-navigable "web."

Internet. A collection of interconnected or disconnected networks (public and/or private) that are linked together by a set of standard protocols (such as TCP/IP and HTTP) to form a global, distributed network. (While this term is intended to refer to what is now commonly known as the Internet, it is also intended to encompass variations which may be made in the future, including changes and additions to existing standard protocols.)

Language Identifier. The language identifier uniquely identifies each language available for the file that is to be displayed in multiple languages.

Localized String. The localized string is the text defined by the string identifier and the language identifier that is displayed to the user.

Localized String Retrieval Function. The Localized String Retrieval Function comprises code that retrieves the localized string according to the string identifier and the language identifier from the message catalog.

Message Catalog. The message catalog stores the localized strings according to their language identifier and string identifier.

Personal Digital Assistant (PDA). A small hand-held computer used to write notes, track appointments, manage email and browse the web, generally with far less storage capacity than a desktop computer.

String Identifier. The string identifier uniquely identifies each text in the file that is to be displayed in multiple languages.

URL (Uniform Resource Locator). A unique address which fully specifies the location of a file or other resource on the Internet or a network. The general format of a URL is protocol: //machine address:port/path/filename.

World Wide Web ("Web"). Used herein to refer generally to both (i) a distributed collection of interlinked, user-viewable hypertext documents (commonly referred to as Web documents or Web pages) that are accessible via the Internet, and (ii) the client and server software components which provide user access to such documents using standardized Internet protocols. Currently, the primary standard protocol for allowing applications to locate and acquire Web documents is HTTP, and the Web pages are encoded using HTML. However, the terms "Web" and "World Wide Web" are intended to encompass future markup languages and transport protocols which may be used in place of (or in addition to) HTML and HTTP.

Web Site. A computer system that serves informational content over a network using the standard protocols of the World Wide Web. Typically, a Web site corresponds to a particular Internet domain name, such as "HP.com," and includes the content associated with a particular organization. As used herein, the term is generally intended to encompass both (i) the hardware/software server components that serve the informational content over the network, and (ii) the "back end" hardware/software components, including any non-standard or specialized components, that interact with the server components to perform services for Web site users. More importantly, a Web Site can have additional functionality, for example, a Web site may have the ability to print documents, scan documents, etc.

Broadly stated, the present invention is directed to an improved system and method for providing a file in multiple languages. The system and method provides a file in multiple languages that uses a message catalog having a localized string for each text in the file in a designated language. As a result, multiple languages can be displayed with the use of a single file using the message catalog.

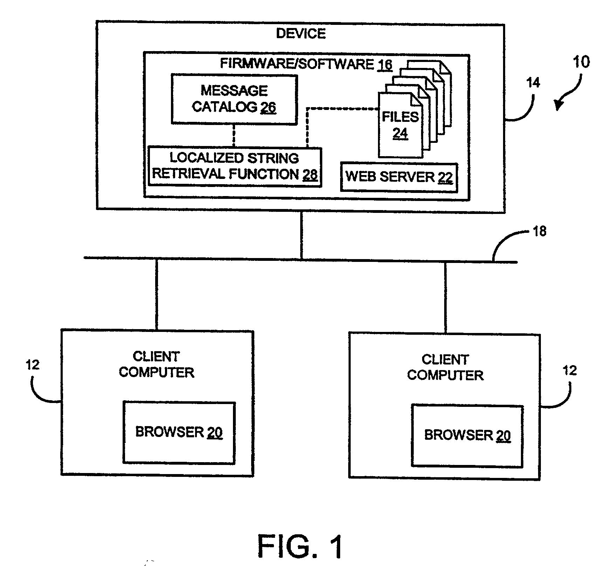

The network system in which the present invention can be implemented is shown in FIG. 1, and indicated generally at 10. Two client computers 12 are connected to a device 14 having a firmware/software 16 configured for the present invention via a network 18. Although the Internet is the preferable network connection 18 because it provides the most flexible and universal system of communication, other networks, such as an intranet, are contemplated as well. For example, a web-based implementation, although preferred, is not the only option available. The present invention can be configured and coded to work with different network or operation systems. In fact, the present invention can be implemented without a network system at all. It can also be implemented with the use of a storage medium, such as a CD Rom. As a result, it is appreciated that the device 14 can refer to a computing device as well as a peripheral device. In the case of the peripheral device, the present invention is preferably implemented as firmware. On the other hand, for the computing device, the present invention is preferably implemented as software.

As a result of the many possible implementations for the present invention, an explanation of the current preferred embodiment of the network topology is given as an example. The complexity of the various available implementations is furthered by the use of different file formats that can change as a result, and the software or firmware needed to work with the given desired file formats. In trying to present a clearer description of the present invention, a web-based implementation will be used as an example. However, it should be understood that others skilled in the art can appreciate the implementations of the various systems and configurations, and these implementations are within the scope of the present invention.

With a web-based implementation shown as an example, each client computer 12 includes a browser 20 for communicating with a web server 22 embedded in the firmware 16. As shown, the firmware/software 16 also includes a plurality of files 24, a message catalog 26, and a localized string retrieval function 28. Each file 24 contains a set of different text that can be displayed in multiple languages by using the message catalog 26. In other words, each file 24 constitutes a different document that can be viewed in different languages using the message catalog 26.

More specifically, the message catalog 26 actually contains the text of the files in all the available languages. In the preferred embodiment, because the text from the files may overlap, a single message catalog is preferred for all the files in order to minimize the needed storage memory. However, the present invention can also be implemented with a message catalog for each file, which still will result in more efficient use of storage memory than having one file for each language. To obtain the text in the specified language from the message catalog, a localized string retrieval function 28 is needed for retrieving the text of a requested file. Although the localized string retrieval function 28 is to be separate from the files 24, in the preferred embodiment, the localized string retrieval function is included with the file. However, the localized string retrieval function can also be implemented as separate software or firmware to access the message catalog.

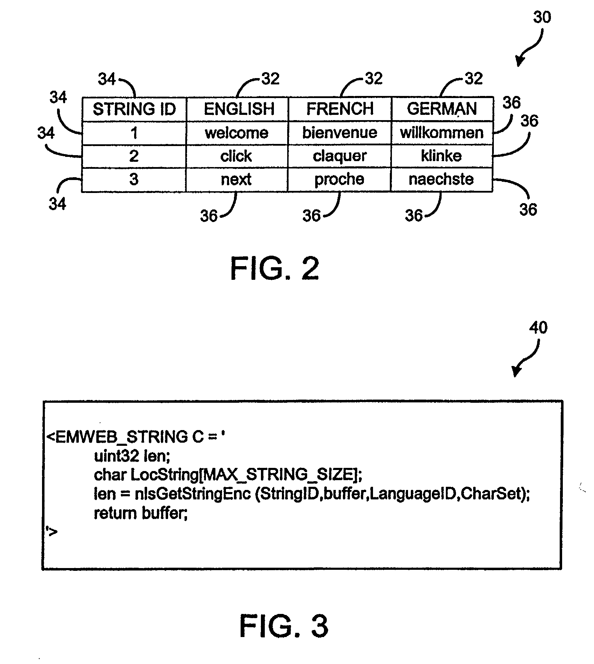

An exemplary database structure of the message catalog is shown in FIG. 2 and indicated generally at 30. The preferred structure of the message catalog is a two-dimensional matrix with a language identifier 32 on the x-axis and a string identifier 34 on the y-axis. The string identifier uniquely identifies each text in the file 24, and similarly the language identifier uniquely identifies each language available for the file. In the example shown in FIG. 2, there are 3 language identifiers 32 (e.g., English, French, and German) and 3 string identifiers 34 (e.g., 1 for welcome, 2 for click, and 3 for next). Each string identifier is followed by a localized string 36 in each of the 3 language identifiers.

The localized string 36 is the text defined by the string identifier and the language identifier that is to be displayed to the user. For example, for string identifier "1", a localized string 36 for the language identifier "English" will be displayed as "welcome." In other words, the localized string 36 defined by the language identifier "English" and the string identifier "1" is "welcome," which is displayed to the user. Similarly, a localized string of "bienvenue" will be displayed to users for string identifier "1" and the language identifier "French." The message catalog stores the localized strings according to their language identifier and string identifier, and can be retrieved by the localized string retrieval function.

The localized string retrieval function, when executed, provides the string identifier and the language identifier to the message catalog for retrieval of the localized string. In fact, all the text from the file is designated by localized string retrieval functions with the proper string identifier and the specified language identifier. The file, in actuality, contains no text. Rather, it contains many localized string retrieval functions designated by string identifiers and language identifiers for displaying the text of the file.

As is well-known in the art, HTML is the most common language in a web-based environment. If the files 24 shown in FIG. 1 are HTML files, the localized string retrieval function is preferably implemented with C code embedded in the HTML file. An example of the localized string retrieval function as a C code is shown in FIG. 3 and indicated generally at 40. The localized string retrieval function 28 that is needed to retrieve the localized string 38, in this example, is "nlsGetStringEnc(StringID, buffer, LanguageID, CharSet)."

As shown, the localized string retrieval function includes 4 different parameters. There is a string identifier (i.e., stringID) that uniquely identifies the text in the file that the localized string retrieval function is seeking to retrieve, and a language identifier (i.e., LanguageID) that identifies the specified language requested for the file. The buffer identifier (i.e., buffer) indicates the memory buffer in which the returned localized string should be stored, and the character set identifier (i.e., CharSet) identifies the character set to be used by the browser to display the localized string.

There are multiple ways to configure the localized string retrieval function. For example, other parameters can be added or excluded, depending on the implementation. For the web-based implementation, the preferred localized string retrieval function includes the four proposed parameters. However, the buffer identifier and the character set identifier do not necessarily have to be included in the localized string retrieval function. Other ways can also be used to identify the character set and memory buffer for the file before the localized string retrieval function is executed. The localized string retrieval function should, however, include the language identifier and the string identifier for retrieving the localized string from the message catalog. But, as known in the art, there are various ways to implement the localized string retrieval function, and other implementations should be understood to be within the scope of the present invention.

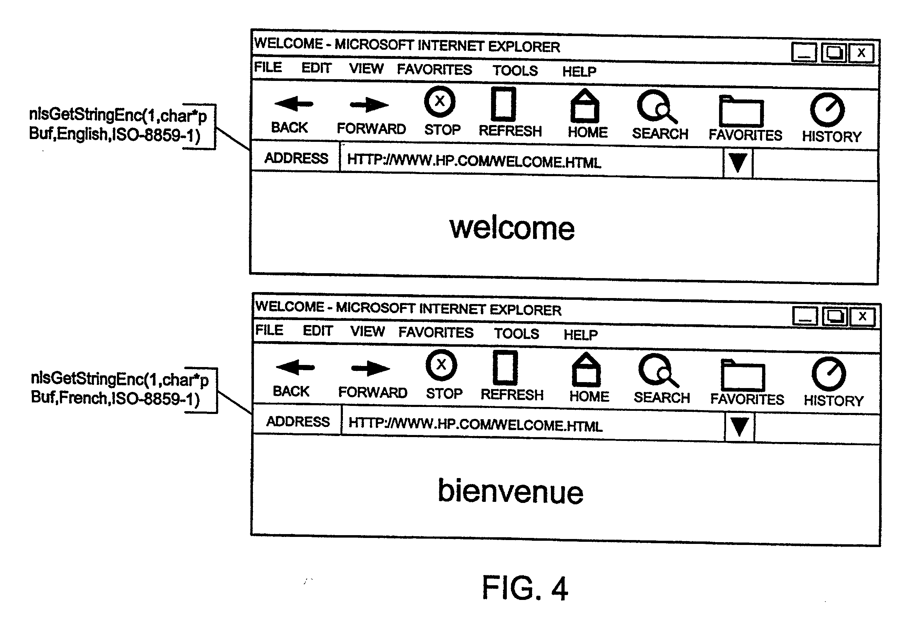

Using the localized string retrieval function shown in FIG. 3, an example of a web page that can display two different languages using the same file is shown in FIG. 4. For the localized string retrieval function of "nlsGetStringEnc(1,char*pBuf,English,ISO-8859-1)," the word "welcome" is displayed. On the other hand, "nlsGetStringEnc(1,char*pBuf,French,ISO-8859-1)" displays the word "bienvenue." More importantly, please note that the same file is being accessed and displayed by the browser, specifically "welcome.html." As a result, the Uniform Resource Locator ("URL") (i.e., HTTP://WWW.HP.COM/WELCOME.HTML) remains unchanged even when the file is requested in different languages. Another useful feature of the present invention is that only a single file must be referenced by web sites using different languages. For example, a web site in French will have the same URL as a web site in German, resulting in more consistent and organized web configurations.

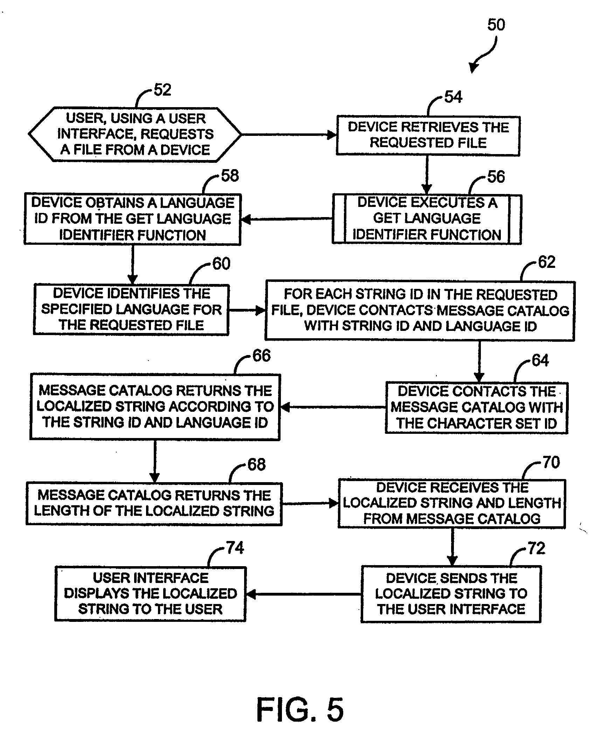

Turning to an important aspect of the present invention, a flow chart of the preferred functionality of the retrieval method is shown in FIG. 5, and indicated generally at 50. The retrieval method is initiated by a user requesting a file from a device through a user interface (block 52). It should be noted that the user interface generally refers to a computer, and the device refers to a peripheral device or a computing device. Because of the many possible implementations of the system, the steps included with the flow chart can vary greatly. But it should be appreciated that user interface or device is meant to refer to a variety of system implementations.

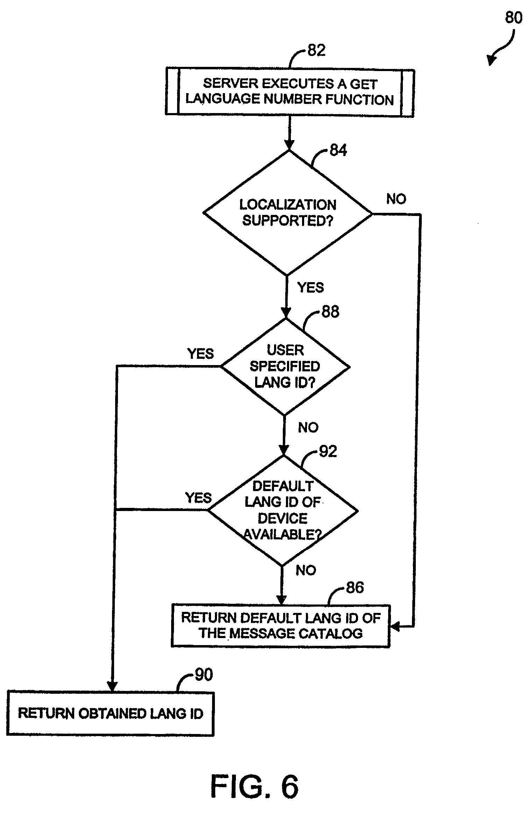

As a result of a request for the file (block 52), the device, in response, retrieves the requested file (block 54). The device next executes a get language identifier function for obtaining the language specified for the requested file (block 56), and initiating the get language identifier method shown in FIG. 6. A language identifier is eventually obtained through the get language identifier function (Block 58), and, as a result, the device is able to identify the specified language for the requested file (block 60).

For each string identifier indicated in the requested file, the device next contacts the message catalog with the string identifier and the language identifier (block 62). Also, the device preferably contacts the message catalog with the character set identifier as well (block 64), which is used to instruct the user interface the character set to use when the localized string is finally displayed to the user. In response, the message catalog returns the localized string according to the string identifier and the language identifier (block 66), and preferably along with the length of the localized string (block 68). The device receives the localized string and the length of the localized string from the message catalog (block 70), and the localized string will be sent to the user interface (block 72) for display to the user (block 74) according to the character set identifier.

A flow chart of the preferred functionality of the get language identifier method is shown in FIG. 6, and indicated generally at 80. Although the get language identifier method is initiated by the retrieval method in FIG. 5 (block 82), the get language identifier method can also be initiated by other functions and at any time, just as long as before the localized string retrieval function is executed. This method is included to ensure that a language identifier will be obtained before the message catalog is contacted. The first step is to determine whether the device supports the localization system (block 84). If the localization system is not supported by the device (block 84), the default language identifier of the message catalog is returned (block 86), which ends the process since a language identifier has been returned.

However, if the device supports localization (block 84), it is determined whether there is a language identifier that is specified by the user (block 88). In the web-based implementation, users can override their default language identifier through the language cookie of the browser. In this case, the language cookie will be used to obtain the language identifier. If a language identifier is specified by the user (block 88), the user specified language identifier will be returned (block 90), and the process will end as a result. If, on the other hand, there is no user specified language identifier (block 88), it is next determined whether there is a device default language identifier (block 92). Again, if the web-based exemplary implementation is used, the device default language will be the default language of the browser. If a device default language identifier is supported (Block 92), it will be returned to the get language identifier function (block 90). Otherwise, the default language identifier of the message catalog is returned (block 86).

From the foregoing description, it should be understood that an improved system and method for providing a file in multiple languages has been shown and described, which has many desirable attributes and advantages. The system and method provides a file in multiple languages that uses a message catalog. The message catalog, in turn, has a localized string for each of the text contained in the file in a designated language. From the message catalog, multiple languages can be displayed with the use of a single file. The present invention, as a result, makes the use of storage memory more efficient, and changes to the file can also be made more consistently and with less effort.

While various embodiments of the present invention have been shown and described, it should be understood that other modifications, substitutions and alternatives are apparent to one of ordinary skill in the art. Such modifications, substitutions and alternatives can be made without departing from the scope of the invention, which should be determined from the appended claims.

## Claims

1. A system for providing a file (24) in multiple languages, comprising:
a file (24) having text for displaying in multiple languages;
a string identifier (34) for uniquely identifying each text in said file;
a language identifier (32) for uniquely identifying each language available for said file;
a localized string (36) for displaying text defined by said string identifier and said language identifier;
a message catalog (26) for storing a plurality of said localized strings; and,
a localized string retrieval function (28) for retrieving said localized string according to said string identifier and said language identifier from said message catalog.

2. The system as defined in claim 1 wherein said localized string retrieval function (28) retrieves said localized string (36) according to said string identifier (34) and said language (32) identifier from said message catalog for each text in said file.

3. The system as defined in claim 1 wherein said file (24) is in Hyper Text Markup Language.

4. A method for providing a file (24) in multiple languages using a device (14) linked to a message catalog (26) having a plurality of localized strings (36) for displaying text in the file, wherein each localized string is defined by a string identifier (34) that uniquely identifies each text in the file and a language identifier (32) that uniquely identifies each language available for the file, comprising the steps of:
requesting a file in a specified language by the user (52);
identifying the specified language (60);
contacting the message catalog with the string identifier and the specified language (62); and,
returning the localized string designated by the string identifier and specified language (66).

5. The method according to claim 4 further comprising the step of returning the length of the localized string designated by the string identifier and specified language (68).

6. The method according to claim 4 wherein prior to the step of identifying the specified language (60) further comprising the steps of:
executing a get language identifier function (56); and,
obtaining a language identifier from the get language identifier function (58).

7. The method according to claim 6 wherein said step of executing a get language identifier function (56) further comprising the steps of:
determining whether the message catalog is supported by the device (84); and,
returning a default language of the message catalog (86) when the message catalog is not supported (84).

8. The method according to claim 7 further comprising the steps of:
determining whether the language has been specified by the user (88);
returning the user specified language (90) when a language is specified by the user (88); and,
returning a default language of the message catalog (86) when a language is not specified by the user (88).

9. The method according to claim 7 further comprising the steps of:
determining whether there is a default language of the device (92);
returning the specified language (90) when there is a default language of the computing device (92); and,
returning a default language of the message catalog (86) when there is no default language of the computer device (92).

10. The method according to claim 4 wherein prior to the step of contacting the message catalog (62) further comprising the step of contacting the message catalog with the character set identifier (64).
